# EUROPÄISCHE PATENTSCHRIFT

(11) **EP 3 034 893 B1**
(45) Veröffentlichungstag und Bekanntmachung des Hinweises auf die Patenterteilung: **09.08.2017**
(21) Anmeldenummer: 14198333.8
(22) Anmeldetag: 16.12.2014
(51) Int. Cl.: F16B 13/00

(54) **Schraubdübel**
Screw dowel
Vis-cheville

(43) Veröffentlichungstag der Anmeldung: 22.06.2016
(73) Patentinhaber: EJOT GmbH & Co. KG, 57319 Bad Berleburg (DE)
(72) Erfinder: Rausch, Uwe, 99897 Tambach-Dietharz (DE); Stötzer, Jan, 99897 Tambach-Dietharz (DE); Göring, Marko, 99867 Gotha (DE)
(74) Vertreter: Puschmann Borchert Bardehle Patentanwälte Partnerschaft mbB

(56) Entgegenhaltungen:
- DE-A1- 2 256 938
- DE-A1- 4 041 765

## Beschreibung

Die Erfindung betrifft einen Schraubdübel zum Eindrehen in einen elastischen Werkstoff nach dem Oberbegriff des Anspruchs 1.

Die DE 40 41 765 A1 betrifft einen Einschraubdübel zum Eindrehen in Werkstoffe geringer Eigenfestigkeit. Um eine hohe Auszugsfestigkeit im Werkstoff zu gewährleisten, wird ein Gewinde vorgeschlagen, bei welchem die Gewindeflanken mit der Gewindehöhe einen Winkel einschließen, der im vorderen Bereich flacher ist als im hinteren Bereich der Schraube.

Ausgehend von dieser Art Schraubdübel für Werkstoffe mit geringer Eigenfestigkeit ist es Aufgabe der Erfindung, die Ausdrehung des Dübels bei Ausdrehung der in den Schraubdübel eingesetzten Schraube zu verhindern.

Die Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

In bekannter Weise umfasst ein Schraubdübel zum Eindrehen in einen elastischen Werkstoff einen Kopf und einen daran anschließenden Schaft. Ferner trägt der Schaft ein Gewinde, das zwei Flankenflächen aufweist, wobei der Schaft in seinem dem Kopf zugewandten Bereich eine Schraubenaufnahme zur Aufnahme einer einzubringenden Schraube aufweist.

Erfindungsgemäß ist vorgesehen, dass das Gewinde in einem Teilbereich eine Rückhaltestruktur aufweist, die sich gegenüber wenigstens einer Flankenfläche in axialer Richtung der Schraube ausgehend von der Flankenfläche erhebt. Die Gewindeflanke weist zur Bildung der Rückhaltestruktur eine Steigung in Richtung des Gewindegangs auf, die größer ist als die des Gewindegangs. Ferner weist das Gewinde wenigstens eine im Wesentlichen in radialer Richtung erstreckende Ausnehmung auf, die sich von der Gewindespitze in Richtung des Schaftes erstreckt und die Rückhaltestruktur entgegen der Gewindedrehrichtung wenigstens teilweise begrenzt.

Indem die Rückhaltestruktur durch die zugeordnete Ausnehmung abgegrenzt ist, ist eine Rückdrehsperrfläche gebildet, die sich aus der ausgeschnittenen Fläche der Rückhaltestruktur zusammen mit der Gewindeschnittfläche ergibt. Die so addierte Rückdrehsperrfläche wirkt einer Rückdrehung des Schraubelements entgegen. Durch die vergrößerte axiale Ausdehnung in diesem Bereich kann eine verbesserte Rückhaltewirkung in einem elastischen Werkstoff erzielt werden, ohne das Einschraubverhalten negativ zu beeinflussen.

Auf diese Weise kann eine Schraube in den Bereich der Schraubenaufnahme ein- und wieder ausgedreht werden, ohne dass der Schraubdübel dabei wieder ausgedreht wird.

Vorzugsweise liegt die Rückdrehsperrfläche radial zur Schraube, insbesondere in einer Ebene, die durch die Schraubenachse und einer Orthogonalen zur Schraubenachse aufgespannt wird. Dadurch wird die Hebelwirkung zur Rückdrehsicherung optimal ausgenutzt.

Durch die Ausnehmung wird eine von der Rückdrehsperrfläche weiter entgegen der Gewindedrehrichtung liegende Gewindeschnittfläche als eine die Ausnehmung begrenzende Begrenzungsfläche gebildet. Diese kann vorzugsweise orthogonal oder im Wesentlichen orthogonal zur Rückdrehsperrfläche verlaufen. So ergibt sich eine im Wesentlichen dreieckige Ausnehmung, deren Schenkel einen Winkel ≥ 90° einschließen. Eine solche Lage der Begrenzungsfläche führt dazu, dass die der Rückdrehsperrfläche nachfolgende Begrenzungsfläche einen geringen Eindrehwiderstand aufweist.

Die Rückhaltestruktur und Tiefe der Ausnehmung sind vorzugsweise so aufeinander abgestimmt, dass sich eine Rückdrehsperrfläche ergibt, die um 5% bis 20%, insbesondere 15%, größer ist als die Fläche, die sich durch denselben Ausschnitt ohne Rückhaltestruktur ergeben würde.

Die Tiefe der Ausnehmung in radialer Richtung beträgt wenigstens 30% der Gewindehöhe, vorzugsweise zwischen wenigstens 50% und wenigstens 70%.

Vorzugsweise kann eine Vielzahl von Rückhaltestrukturen mit zugeordneten korrespondierenden Ausnehmungen, also eine Vielzahl von Rückdrehsperrflächen, vorgesehen sein.

Das Gewinde weist im Wesentlichen einem Gewinde zugeordnete Gewindeparameter auf, mit welchen der größte Teil des Gewindes gestaltet ist. Die Flankenfläche des Gewindes beträgt etwa 70% bis 80% der Flankenfläche, die ein Grundgewinde ohne Unterbrechung hätte.

Sind eine Vielzahl von Rückhaltestrukturen und korrespondierende Ausnehmungen vorgesehen, die vorzugsweise so angeordnet sind, so dass die Rückdrehsperrflächen in einer Ebene liegen, die insbesondere parallel zur Schraubenachse verläuft, kann also auch die Schraubenachse in der Ebene liegen.

In einer besonders vorteilhaften Ausgestaltung kann vorgesehen sein, dass der Schaft im Bereich der Schraubenaufnahme eine vollständig geschlossene Oberfläche aufweist. Dies hat den Vorteil, dass bei Eindrehen des Schraubelements in einen elastischen Werkstoff das für den Eindrehvorgang benötigte Drehmoment konstant gehalten werden kann.

In einer weiteren bevorzugten Ausführung kann das Gewinde derart gestaltet sein, dass der letzte dem Kopf des Schraubelements zugewandte Gewindegang wenigstens teilweise eine geringere Steigung als das übrige Gewinde aufweist.

Vorzugsweise kann der Bereich der geringeren Steigung in seiner Lage derart gewählt sein, dass dieser in axialer Richtung betrachtet über einer Ausnehmung im vorangehenden Gewindegang liegt. Dadurch kann zusätzlich elastisches Material zwischen der Rückdrehfläche der Rückhaltestruktur und dem darüberliegenden Gewindegang komprimiert werden, was zu einer verbesserten Rückdrehsicherung führt.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: einen erfindungsgemäßen Schraubdübel;
- Fig. 2: eine perspektivische Ansicht des erfindungsgemäßen Schraubdübels, und
- Fig. 3: eine Draufsicht des erfindungsgemäßen Schraubdübels.

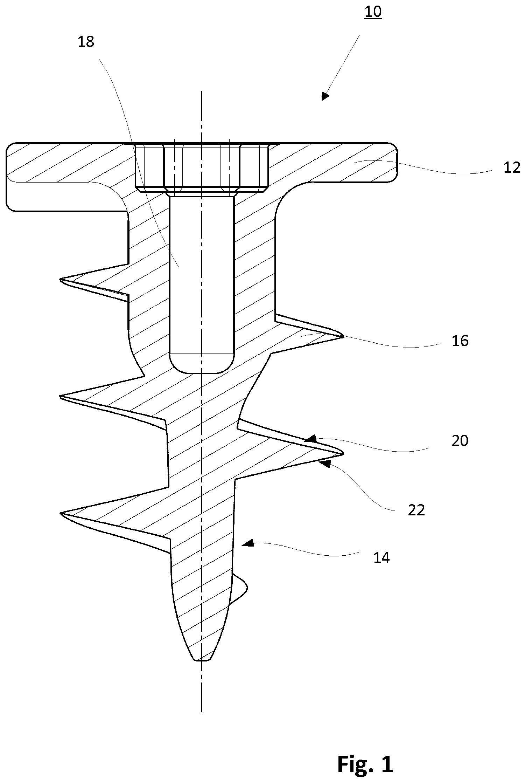

Fig. 1 zeigt einen erfindungsgemäßen Schraubdübel 10, der einen Kopf 12 und einen Schaft 14, der mit einem Gewinde 16 versehen ist, aufweist. In dieser Ausgestaltung ist in den oberen Bereich des Schraubdübels 10 eine Ausnehmung 18 eingebracht, die als Schraubenaufnahme dient. Das Gewinde 16 weist eine erste Flankenfläche 20 und eine zweite Flankenfläche 22 auf.

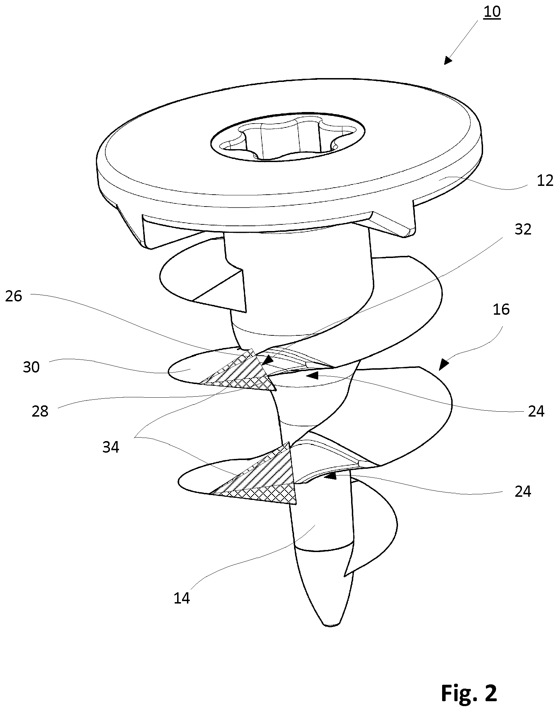

Fig. 2 zeigt einen erfindungsgemäßen Schraubdübel gemäß Fig. 1 in einer perspektivischen Ansicht. Der Schraubdübel 10 umfasst einen Schaft 14 mit einem Gewinde 16. Das Gewinde 16 verläuft grundsätzlich von der Spitze bis unter den Kopf 12. An dieses im Weiteren als "Grundgewinde" bezeichnete Gewinde 30 sind Rückhaltestrukturen angeformt, die sich ausgehend von der Oberfläche der Gewindeflanke des Grundgewindes 30 insbesondere entgegen der Einschraubrichtung erheben. Im Weiteren ist eine Ausnehmung 24 vorgesehen, die sich von der Gewindespitze im Wesentlichen in radialer Richtung in Richtung des Schafts 14 erstreckt. Diese Ausnehmung 24 schneidet in Eindrehrichtung sowohl das Grundgewinde 30 als auch die Rückhaltestrukturen 26, 28, wodurch eine Rückdrehsperrfläche 32 gebildet ist. Diese Rückdrehsperrfläche 32 umfasst eine Grundfläche 34, die durch den Schnitt im Grundgewinde entsteht, sowie die Schnittfläche durch die Rückhaltestrukturen 26, 28.

An dem in Drehrichtung abgewandten Ende der Ausnehmung 24 verläuft das Gewinde weiter in Form des Grundgewindes 30. Durch die Rückhaltestrukturen 26, 28 mit anschließender Ausnehmung 24 ergibt sich bei elastischen Werkstoffen trotz guter Einschraubbarkeit eine verbesserte Ausdrehfestigkeit sowie eine verbesserte Rückdrehfestigkeit. Die Ausnehmung 24 erstreckt sich im vorliegenden Ausführungsbeispiel an den Schaft 14 des Schraubdübels 10. Im vorliegenden Beispiel ist die Rückdrehsperrfläche in etwa 20% größer als die Schnittfläche des Grundgewindes.

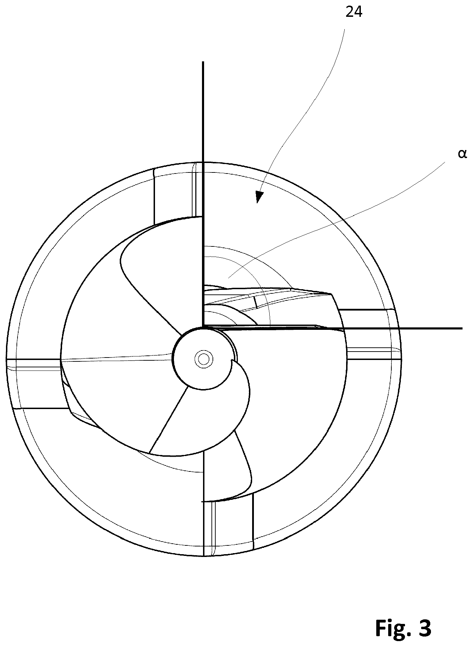

Fig. 3 zeigt einen erfindungsgemäßen Schraubdübel 10 in einer Draufsicht von der Spitze her gesehen. In dieser Darstellung ist zu erkennen, dass die Ausnehmungen 24 im Wesentlichen im 90°-Winkel α ausgeführt sind. Gut an dieser Darstellung zu erkennen ist, dass in Einschraubrichtung die Schnittlinie der Ausnehmung 24 radial verläuft, wohingegen die Schnittlinie entgegen der Einschraubrichtung parallel zu einer Tangente des Schafts 14 verläuft. Dies sorgt für eine gute Einschraubbarkeit bei verbesserter Ausdrehsicherung. Die Schnittflächen in Einschraubrichtung liegen in einer Ebene, in der auch die Schraubenachse liegt. Dies begünstigt die Fertigung.

## Patentansprüche

1. Schraubdübel (10) zum Eindrehen in einen elastischen Werkstoff mit einem Kopf (12) und einem daran anschließenden Schaft (14), ferner trägt der Schaft (14) ein Gewinde (16), das zwei Flankenflächen (20, 22) aufweist, wobei der Schaft (14) in seinem dem Kopf (12) zugewandten Bereich eine Schraubenaufnahme (18) zur Aufnahme einer in die Schraubenaufnahme (18) einzubringenden Schraube aufweist, **dadurch gekennzeichnet, dass** das Gewinde (16) in einem Teilbereich eine Rückhaltestruktur (26, 28) aufweist, die sich gegenüber wenigstens einer Flankenfläche in axialer Richtung des Schraubendübels ausgehend von der Flankenfläche erhebt, wobei ferner das Gewinde (16) wenigstens eine Ausnehmung (24) aufweist, die sich in radialer Richtung von der Gewindespitze in Richtung des Schafts (14) erstreckt - Ausnehmungstiefe -, und die der Rückhaltestruktur (26, 28) zugeordnet ist und diese entgegen der Gewindedrehrichtung wenigstens teilweise in einer Rückdrehsperrfläche (32) begrenzt.

2. Schraubdübel nach Anspruch 1, **dadurch gekennzeichnet, dass** die Rückhaltestruktur (26, 28) und die Ausnehmungstiefe derart aufeinander abgestimmt sind, dass sich eine Rückdrehsperrfläche (32) ergibt, die zwischen 5% und 20% größer ist als die Fläche die sich bei einer Ausnehmung (24) entsprechender Tiefe in das Gewinde (16) ohne Rückhaltestruktur (26, 28) ergibt.

3. Schraubdübel nach einem der vorangehenden Ansprüche, **dadurch gekennzeichnet, dass** die Ausnehmung (24) in Draufsicht zwei Schenkel aufweist, wobei der eine Schenkel in der Rückdrehsperrfläche (32) liegt und der andere Schenkel in einem Winkel vorn ≥ 90° zu diesem Schenkel den Gewindegang ausnimmt.

4. Schraubdübel nach einem der vorangehenden Ansprüche, **dadurch gekennzeichnet, dass** eine Vielzahl von Rückdrehsperrflächen (32) vorgesehen sind.

5. Schraubdübel nach Anspruch 4, **dadurch gekennzeichnet, dass** die Rückdrehsperrflächen (32) in einer Ebene liegen.

6. Schraubdübel nach Anspruch 4 oder 5, **dadurch gekennzeichnet, dass** die Summe der Flächen der Ausnehmungen 20% bis 30 % der Flankengesamtfläche des Gewindes beträgt.

7. Schraubdübel nach einem der vorangehenden Ansprüche, **dadurch gekennzeichnet, dass** ein Teilbereich des Gewindes gegenüber dem übrigen Gewinde eine geringere Steigung aufweist.

8. Schraubdübel nach Anspruch 7, **dadurch gekennzeichnet, dass** sich der Teilbereich der geringeren Steigung in axialer Richtung der Schraube über eine Ausnehmung (24) des darunterliegenden Gewindegangs erstreckt.

9. Schraubdübel nach einem der vorangehenden Ansprüche, **dadurch gekennzeichnet, dass** der Teilbereich in dem dem Kopf (12) nächstliegenden Gewindegang liegt.

10. Schraubdübel nach einem der vorangehenden Ansprüche, **dadurch gekennzeichnet, dass** die Ausnehmungstiefe in radialer Richtung wenigstens 30% der Gewindehöhe, insbesondere 50% - 100% der Gewindehöhe, beträgt.

11. Schraubdübel nach einem der vorangehenden Ansprüche, **dadurch gekennzeichnet, dass** der Schaft (14) im Bereich der Schraubenaufnahme eine vollständig geschlossene Oberfläche aufweist.

## Claims

1. Screw dowel (10) to be screwed into an elastic material, which dowel (10) has a head (12) and an adjacent shank (14), which shank (14) is furthermore provided with a thread (16) that has two flank surfaces (20, 22), wherein the region of said shank (14) which faces the head (12) is provided with a screw receiving portion (18) for receiving a screw to be inserted into the screw receiving portion (18), **characterized in that** part of the thread (16) is provided with a retaining structure (26, 28) which rises from the flank surface in the axial direction of the screw dowel in contrast to at least one flank surface, which thread (16) furthermore has at least one recess (24) that extends radially from the crest of the thread toward the shank (14) - recess depth - and that is associated with the retaining structure (26, 28) and limits the latter at least partially in an anti-reversing surface (32) against the direction of rotation of the thread.

2. Screw dowel according to claim 1, **characterized in that** the retaining structure (26, 28) and the recess depth are matched to one another so as to form an anti-reversing surface (32) which is 5% to 20% larger than the surface which is obtained with a recess (24) of corresponding depth in the thread (16) without a retaining structure (26, 28).

3. Screw dowel according to any one of the preceding claims, **characterized in that** the recess (24), as viewed from the top, has two legs, one of which lies in the anti-reversing surface (32) and the other leg extends at an angle of ≥ 90° relative to the former leg, thus encompassing the thread pitch between them.

4. Screw dowel according to any one of the preceding claims, **characterized in that** it is provided with a plurality of anti-reversing surfaces (32).

5. Screw dowel according to claim 4, **characterized in that** said anti-reversing surfaces (32) lie in one plane.

6. Screw dowel according to claim 4 or 5, **characterized in that** the sum of the surface areas of said recesses is 20% to 30% of the total flank surface of the thread.

7. Screw dowel according to any one of the preceding claims, **characterized in that** a portion of the thread has a lower pitch than the rest of the thread.

8. Screw dowel according to claim 7, **characterized in that** the portion of the thread which has a lower pitch extends over a recess (24) of the underlying thread turn in an axial direction of the screw.

9. Screw dowel according to any one of the preceding claims, **characterized in that** said thread portion is located in the thread turn which is closest to the head (12).

10. Screw dowel according to any one of the preceding claims, **characterized in that** the depth of the recess in the radial direction is at least 30% of the thread height, in particular 50% - 100% of the thread height.

11. Screw dowel according to any one of the preceding claims, **characterized in that** the surface of the shank (14) is completely closed in the region of the screw receiving portion.

## Revendications

1. Cheville filetée (10) destinée à être vissée dans un matériau élastique, comprenant une tête (12) et une tige (14) raccordée à celle-ci, la tige (14) portant en outre un filet (16) qui comprend deux surfaces de flanc (20, 22), la tige (14) présentant dans sa zone tournée vers la tête (12) un logement de vis (18) destiné à loger une vis à introduire dans le logement de vis (18), **caractérisée en ce que** le filet (16) présente dans une zone partielle une structure de retenue (26, 28) qui s'élève par rapport à au moins une surface de flanc dans la direction axiale de la cheville filetée à partir de la surface de flanc, le filet (16) présentant en outre au moins un évidement (24) qui s'étend dans la direction radiale de la pointe filetée en direction de la tige (14) -profondeur de l'évidement-, et qui est associé à la structure de retenue (26, 28) et limite celle-ci à l'encontre du sens de rotation du filet au moins en partie dans une surface de blocage de rotation inverse (32).

2. Cheville filetée selon la revendication 1, **caractérisée en ce que** la structure de retenue (26, 28) et la profondeur de l'évidement sont adaptées l'une à l'autre de telle manière que cela permet d'obtenir une surface de blocage de rotation inverse (32) qui est entre 5 % et 20 % plus grande que la surface obtenue avec un évidement (24) d'une profondeur correspondante dans le filet (16) exempt de structure de retenue (26, 28).

3. Cheville filetée selon l'une quelconque des revendications précédentes, **caractérisée en ce que** l'évidement (24) présente en vue en élévation deux branches, l'une des branches étant située dans la surface de blocage de rotation inverse (32) et l'autre branche logeant le pas de filetage en formant un angle ≥ 90° par rapport à cette branche.

4. Cheville filetée selon l'une quelconque des revendications précédentes, **caractérisée en ce qu'**une pluralité de surfaces de blocage de rotation inverse (32) sont prévues.

5. Cheville filetée selon la revendication 4, **caractérisée en ce que** les surfaces de blocage de rotation inverse (32) se situent dans un plan.

6. Cheville filetée selon la revendication 4 ou 5, **caractérisée en ce que** la somme des surfaces des évidements atteint 20 % à 30 % de la surface totale de flanc du filet.

7. Cheville filetée selon l'une quelconque des revendications précédentes, **caractérisée en ce qu'**une zone partielle du filet présente une plus faible pente ascendante par rapport au reste du filet.

8. Cheville filetée selon la revendication 7, **caractérisée en ce que** la zone partielle présentant la plus faible pente ascendante s'étend dans la direction axiale de la vis sur toute l'étendue d'un évidement (24) du pas de filet situé dessous.

9. Cheville filetée selon l'une quelconque des revendications précédentes, **caractérisée en ce que** la zone partielle se situe dans le pas de filet le plus proche de la tête (12).

10. Cheville filetée selon l'une quelconque des revendications précédentes, **caractérisée en ce que** la profondeur de l'évidement dans la direction radiale atteint au moins 30 % de la hauteur du filet, en particulier 50 % à 100 % de la hauteur du filet.

11. Cheville filetée selon l'une quelconque des revendications précédentes, **caractérisée en ce que** la tige (14) présente dans la zone du logement de filet une surface entièrement fermée.
